# EUROPÄISCHE PATENTSCHRIFT

(11) **EP 1 323 587 B1**
(45) Veröffentlichungstag und Bekanntmachung des Hinweises auf die Patenterteilung: **17.02.2010**
(21) Anmeldenummer: 02028029.3
(22) Anmeldetag: 16.12.2002
(51) Int. Cl.: B60R 13/00

(54) **Kraftfahrzeug-Applikationsteil, insbesondere Karosserieblende**
Element for body-finishing, in particular blind for a vehicle body
Pièce de finition pour une carosserie de véhicule, élément d'occultation, en particulier

(30) Priorität: 15.12.2001 DE 20120319 U
(43) Veröffentlichungstag der Anmeldung: 02.07.2003
(73) Patentinhaber: Hans und Ottmar Binder GmbH, 89558 Böhmenkirch (DE)
(72) Erfinder: Binder, Hans, 89558 Böhmenkirch (DE)
(74) Vertreter: Grosse, Rainer

(56) Entgegenhaltungen:
- PATENT ABSTRACTS OF JAPAN Bd. 0185, Nr. 47 (C-1262), 19. Oktober 1994 (1994-10-19) & JP 6 192917 A (NEW OJI PAPER CO LTD), 12. Juli 1994 (1994-07-12)
- PATENT ABSTRACTS OF JAPAN Bd. 0185, Nr. 47 (C-1262), 19. Oktober 1994 (1994-10-19) & JP 6 192918 A (MITSUBISHI KASEI CORP), 12. Juli 1994 (1994-07-12)
- PATENT ABSTRACTS OF JAPAN Bd. 0110, Nr. 14 (M-553), 14. Januar 1987 (1987-01-14) & JP 61 188227 A (DAIHATSU MOTOR CO LTD), 21. August 1986 (1986-08-21)
- PATENT ABSTRACTS OF JAPAN Bd. 0103, Nr. 23 (M-531), 5. November 1986 (1986-11-05) & JP 61 129322 A (NISSAN MOTOR CO LTD), 17. Juni 1986 (1986-06-17)
- PATENT ABSTRACTS OF JAPAN Bd. 0164, Nr. 52 (M-1313), 21. September 1992 (1992-09-21) & JP 4 159151 A (TOYODA GOSEI CO LTD), 2. Juni 1992 (1992-06-02)

## Beschreibung

Die Erfindung betrifft ein Kraftfahrzeug-Applikationsteil, insbesondere Karosserieblende, mit einer Befestigungsseite und mit einer Ansichtsseite, gemäß Oberbegriff des Anspruchs 1.

Kraftfahrzeug-Applikationsteile der eingangs genannten Art sind bereits bekannt. Sie können beispielsweise als Blenden einer Kraftfahrzeugtür insbesondere im Fensterbereich-, wie offenbart in JP-A-61092917, als Griffleisten für Kofferraumklappen oder Heckklappen eines Kraftfahrzeugs oder als andersartige Blenden ausgebildet sein. Es ist bekannt, derartige Bauteile mittels des Spritzgießverfahrens herzustellen. Dabei werden diese verhältnismäßig dünnwandigen Bauteile anschließend einer mechanischen Oberflächenbearbeitung unterzogen. Schließlich wird das Bauteil insbesondere an seiner Ansichtsseite zum Beispiel mittels eines Pulverbeschichtungs-Verfahrens oder mittels eines Nasslack-Verfahrens mit einem erwünschten Farbüberzug (zum Beispiel in Karosseriefarbe des Kraftfahrzeugs) versehen. Sowohl beim Pulverbeschichtungs-Verfahren als auch beim Nasslack-Verfahren ist zur Erzielung einer endgültigen Aushärtung der aufgetragenen Farbschicht eine Erwärmung derselben auf über 150°C (Pulverbeschichtungs-Verfahren 190°C-210°C; Nasslack-Verfahren 160°C-180°C) erforderlich. Nachteilig hierbei ist, dass bei einem derartigen Temperaturniveau die vorliegende Spritzgussstruktur eine porige Oberfläche, Schülpen-Effekt an der Ansichtsseite des Applikationsteils hervorrufen kann. Ein derartiger nicht erwünschter Effekt ist auf eine Art Ausgasmechanismus der Spritzgussmaterials zurückzuführen. Bei den bekannten Applikationsteilen ergibt sich deshalb eine verhältnismäßig hohe, unplanbare und nicht zufriedenstellende Ausschussquote bei deren fertigungstechnischen Herstellung.

Es ist Aufgabe der Erfindung, ein Kraftfahrzeug-Applikationsteil der eingangs genannten Art bereitzustellen, das in verhältnismäßig einfacher Weise bei relativ geringer Ausschussquote fertigungstechnisch herstellbar ist.

Die Aufgabe wird gelöst durch ein Kraftfahrzeug-Applikationsteil mit den Merkmalen des Anspruchs 1. Das Kraftfahrzeug-Applikationsteil zeichnet sich erfindungsgemäß dadurch aus, dass es ein Befestigungsteil, an welchem die Befestigungsseite ausgebildet ist, und ein mit dem Befestigungsteil verbundenes Abdeckteil aufweist, an welchem die Ansichtsseite ausgebildet ist. Dadurch, dass das Applikationsteil aus zwei voneinander unabhängigen Bauteilen, nämlich dem Befestigungsteil und dem Abdeckteil besteht, welche voneinander getrennt herstellbar und zur Ausbildung des Applikationsteils miteinander verbindbar sind, ist es möglich, dass jedes der beiden Bauteile mittels eines geeigneten Fertigungsverfahrens hergestellt werden kann, um bei einer verhältnismäßig niedrigen Ausschussquote ein qualitativ fehlerfreies Applikationsteil realisieren zu können. Insbesondere kann in dieser Weise beim Abdeckteil in Bezug auf eine nicht erwünschte Bildung einer porigen Oberfläche an der Ansichtsseite aufgrund der Temperaturbehandlung von über 150°C des Applikationsteils ein geeigneteres Fertigungsverfahren als das Spritzgießverfahren gewählt werden. Vorteilhafterweise eröffnet sich dadurch die Möglichkeit, Applikationsteile auch mit einer glanzpolierten und eloxierten Ansichtsseite herzustellen.

Mit Vorteil ist das Befestigungsteil ein Spritzgussteil und das Abdeckteil ein mechanisch verfestigtes Bauteil. Da das Befestigungsteil als Trägerteil dient und somit kein Sichtteil ist, kann selbiges mittels des Spritzgießverfahrens hergestellt werden. Dagegen wird das Abdeckteil insbesondere mittels eines Walz-Blechstanz-Verfahrens beziehungsweise aus Strangguss-Material hergestellt unter Ausbildung eines mechanisch verfestigten Bauteils (Materialverdichtung), so dass die Ansichtsseite des Abdeckteils (Sichtteil) auch für eine Temperaturbehandlung über 150°C geeignet ist, ohne dass eine unerwünschte Porenausbildung an der Ansichtsseite aufgrund dieser Temperaturbehandlung auftritt.

Vorzugsweise sind das Befestigungsteil und das Abdeckteil mittels einer Schweiß-, Schraub-, Niet-, Füge- und/oder Klebverbindung miteinander verbunden. Als Schweißverfahren kann beispielsweise das Laserschweißen zur Erzielung einer maßgenauen Verbindung insbesondere mittels Punktschweißungen des Befestigungsteils und des Abdeckteils herangezogen werden. Da das Befestigungsteil und das Abdeckteil wenigstens teilweise zueinander überlappt angeordnet werden müssen, ist auch die Herstellung einer Klebverbindung zwischen den beiden Teilen fertigungstechnisch verhältnismäßig einfach realisierbar.

Das Befestigungsteil kann an der Befestigungsseite und/oder an seiner Verbindungsseite eine geometrische Formstrukturierung aufweisen. Da das Befestigungsteil kein Sichtteil ist und insbesondere die Funktion eines Trägerteils aufweist, lassen sich mittels einer geometrischen Formstrukturierung beispielsweise Materialeinsparungen bei gleichzeitiger Gewährleistung einer hinreichenden Stabilität an diesem Bauteil erzielen.

Entsprechend einer bevorzugten Ausführungsform weist das Abdeckteil an seiner Verbindungsseite eine in Bezug auf das Befestigungsteil wenigstens teilweise komplimentäre, geometrische Formstrukturierung auf. Hierdurch ist es möglich, fertigungstechnisch eine günstige und korrekte Schweiß-, Schraub-, Niet-, Füge- und/oder Klebverbindung zwischen dem Befestigungsteil und dem Abdeckteil zu realisieren.

Das Abdeckteil ist an der Ansichtsseite vorzugsweise vollständig eben ausgebildet. Ein derartiges Abdeckteil ist fertigungstechnisch verhältnismäßig einfach als Walz-Stanz-Blechteil beziehungsweise in Strangguss-Material ausbildbar. Dabei kommt insbesondere bei einer vollständig ebenen Ansichtsseite die effektive Vermeidung von Oberflächenporen zur Befriedigung von insbesondere ästhetischen Anforderungen positiv zur Geltung.

Mit Vorteil ist das Abdeckteil ein an seiner Verbindungsseite mechanisch bearbeitetes Fließpressteil. Ein Fließpressteil ermöglicht in verhältnismäßig einfacher Weise die Realisierung einer optisch einwandfreien Ansichtsseite auch bei Durchführung einer Temperaturbehandlung von über 150°C und gleichzeitig eine problemlose mechanische Bearbeitung seiner Verbindungsseite, an welcher eine Schweiß-, Schraub-, Niet-, Füge- und/oder Klebverbindung mit dem Befestigungsteil hergestellt werden soll.

Vorzugsweise ist das Abdeckteil an seiner Ansichtsseite oberflächenbeschichtet. Dabei kann die Oberflächenbeschichtung mittels des Pulverbeschichtungs-Verfahrens bei einer Temperaturbehandlung von 190°C bis 210°C oder mittels des Nasslack-Verfahrens bei einer Temperaturbehandlung von 160°C bis 180°C erfolgen. Insbesondere dient die Oberflächenbeschichtung der Ansichtsseite zur Lackierung der Sichtfläche des Applikationsteils beispielsweise in der jeweiligen Wagenfarbe. Gleichzeitig eröffnet sich damit die Möglichkeit, die Applikationsteile auch mit einer glanzpolierten oder eloxierten Sichtfläche herzustellen.

Entsprechend einer bevorzugten Ausführungsform sind das Befestigungsteil und das Abdeckteil aus einer Aluminium-Legierung hergestellt. Dabei kommen insbesondere die sogenannten "weicheren" Aluminiumlegierungen in Frage, wie zum Beispiel eine Aluminium-Zink-Legierung (Al-Zn) oder eine Aluminium-Silizium-Legierung (Al-Si).

Vorteilhafterweise enthalten die Verbindungsseiten des Befestigungsteils und des Abdeckteils ein Positioniersystem. Ein derartiges Positioniersystem dient insbesondere zur lagegenauen Positionierung und Verbindung des Befestigungsteils mit dem Abdeckteil. Dabei kann das Positioniersystem aus mindestens einem Vorsprung und einem zugehörigen, komplementär ausgebildeten Aufnahmesitz bestehen. Beispielsweise kann der Vorsprung am Befestigungsteil und der zugehörige Aufnahmesitz am Abdeckteil an der jeweiligen Verbindungsseite ausgebildet sein.

Mit Vorteil ist das Befestigungsteil mit mindestens einer Befestigungsbohrung und an der Befestigungsseite mit mindestens einer Einhängnase versehen. Dies erlaubt eine handhabungsfreundliche Montage des vorgefertigten Applikationsteils beispielsweise an einem Fahrzeug, wobei die Befestigungsbohrung und die Einhängnase fertigungstechnisch in verhältnismäßig einfacher Weise am Befestigungsteil (Spritzgussteil) realisierbar sind.

Weitere vorteilhafte Ausgestaltungen der Erfindung ergeben sich aus der Beschreibung.

Die Erfindung wird nachfolgend in einem Ausführungsbeispiel anhand zugehöriger Zeichnungen näher erläutert. Es zeigen:
- Figur 1: eine schematische Draufsicht auf eine Ansichtsseite eines Abdeckteils eines erfindungsgemäßen Applikationsteils;
- Figur 2: eine schematische Draufsicht auf eine Verbindungsseite eines Befestigungsteils desselben Applikationsteils;
- Figur 3: eine schematische Ansicht auf eine Befestigungsseite des Befestigungsteils der Figur 2 und
- Figur 4: eine schematische Ansicht auf eine Verbindungsseite des Abdeckteils der Figur 1.

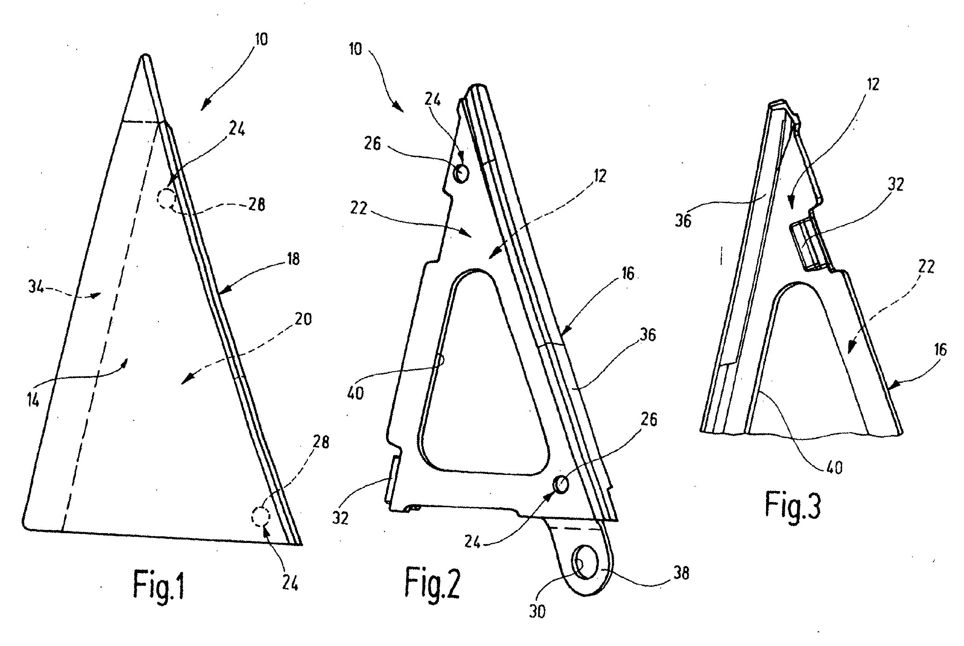

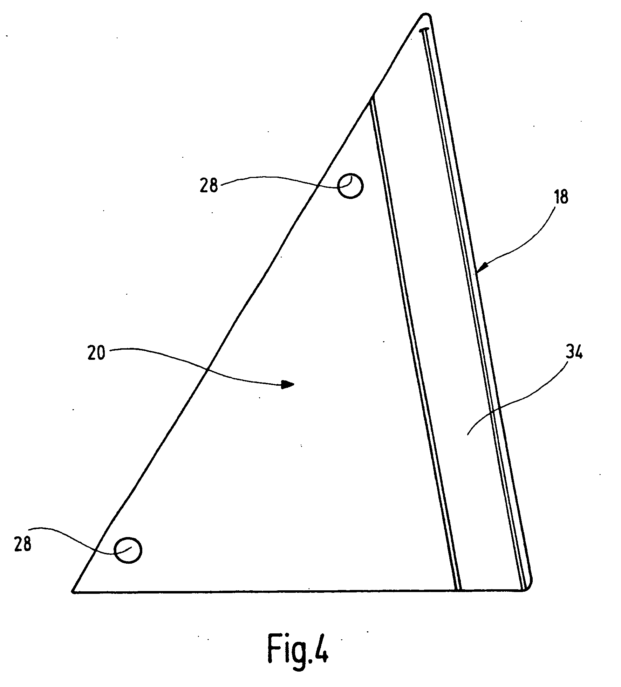

Die Figuren 1 und 4 zeigen in schematischer Darstellung eine Draufsicht (Figur 1) und eine Hinteransicht (Figur 4) eines Abdeckteils 18 eines allgemein mit 10 bezeichneten Kraftfahrzeug-Applikationsteils, während die Figuren 2 und 3 eine perspektivische Draufsicht (Figur 2) und eine perspektivische Hinteransicht (Figur 3) eines Befestigungsteils 16 desselben Kraftfahrzeug-Applikationsteils 10 zeigen. Das Kraftfahrzeug-Applikationsteil 10 enthält somit zwei voneinander unabhängige Bauteile, nämlich das Abdeckteil 18 und das Befestigungsteil 16. Diese beiden Bauteile können zur Ausbildung des vollständigen Kraftfahrzeug-Applikationsteils 10 mittels einer Schweißund/oder Klebverbindung miteinander verbunden werden.

Das Abdeckteil 18 (siehe Figuren 1 und 4) enthält eine Ansichtsseite 14 und eine Verbindungsseite 20. Die Ansichtsseite 14 ist vollständig eben ausgebildet, während die Verbindungsseite 20 eine geeignete geometrische Formstrukturierung aufweist. Dabei besteht die geometrische Formstrukturierung des Abdeckteils 18 auf dessen Verbindungsseite 20 im Wesentlichen aus zwei zueinander beabstandeten Aufnahmesitzen 28 sowie aus einem mechanisch bearbeiteten Abschnitt 34. Bei diesem Ausführungsbeispiel des Abdeckteils 18 handelt es sich um ein Fließpressteil, dass eine mechanisch verfestigte (gewalzte) Materialstruktur aufweist.

Das Befestigungsteil 16 gemäß den Figuren 2 und 3 ist dagegen ein Spritzgussteil mit einer Verbindungsseite 22 und einer Befestigungsseite 12. Das Befestigungsteil 16 ist an seiner Verbindungsseite 22 -komplimentär zu den Aufnahmesitzen 28 des Abdeckteils 18- mit zwei entsprechend zueinander beabstandeten Vorsprüngen 26 versehen, die in Kombination mit den Aufnahmesitzen 28 des Abdeckteils 18 als Positioniersystem 24 dienen, mittels welchem ein lagekorrektes Aufeinanderlegen des Abdeckteils 18 auf das Befestigungsteil 16 zur Herstellung des vollständigen Kraftfahrzeug-Applikationsteils 10 möglich ist. Ferner ist das Befestigungsteil 16 mit einer Befestigungsbohrung 30 sowie mit profilierten Einfassungen 32 (Mehrzahl an Einhängnasen) -im vorliegenden Ausführungsbeispiel zwei Einhängnasenversehen, mittels welchen eine handhabungsfreundliche Montage des Applikationsteils 10 an einem Kraftfahrzeug (nicht in den Figuren dargestellt) möglich ist. Dabei ist die Befestigungsbohrung 30 als Durchgangsbohrung in eine vorstehende Lasche 38 eingearbeitet. Die Einhängnasen 32 sind auf der Verbindungsseite 22 des Befestigungsteils 16 ausgebildet. Auch das Befestigungsteil 16 weist an seiner Verbindungsseite 22 eine in Bezug auf das Abdeckteil 18 wenigstens teilweise komplimentäre, geometrische Formstrukturierung auf. Hierbei ist es mittels einer Ausnehmung 40 im Befestigungsteil 16 möglich, Material zu dessen Realisierung einzusparen, während gleichzeitig die notwendige Stabilität (Steifigkeit) des Befestigungsteils 16 gewährleistet bleibt.

Sowohl das Befestigungsteil 16 als auch das Abdeckteil 18 sind vorzugsweise aus einer Aluminium-Legierung, insbesondere aus einer Aluminium-Zink-Legierung oder aus einer Aluminium-Silizium-Legierung hergestellt.

Zur Herstellung des Abdeckteils 18 wird zunächst mittels eines Walzverfahrens ein Streifen hergestellt, der aus einem mechanisch stark verdichteten Material besteht. Anschließend werden Streifenteile mit gewünschten Außenkonturen geschnitten, wobei die Streifenteile beispielsweise mittels einer Fräs- und Bohrbearbeitung ihre endgültige geometrische Kontur erhalten. Das Abdeckteil 18 wird anschließend an das zuvor spritzgegossene Befestigungsteil 16 insbesondere mittels einer Schweiß-, Schraub-, Niet-, Füge- und/oder Klebeverbindung lagegenau befestigt. Ein derart verbundenes, vollständiges Applikationsteil 10 wird nun einem abschließenden Konturschneidprozess unterzogen. Die Ansichtsseite 14 des Abdeckteils 18 kann nun mittels des Pulverbeschichtungs-Verfahrens beziehungsweise mittels des Nasslack-Verfahrens lackiert werden, ohne dass es zu nicht erwünschten Oberflächenporen an der Ansichtsseite 14 kommt, da das Material des Abdeckteils 18 nun mechanisch stark verdichtet ist. Gleichzeitig eröffnet sich damit die Möglichkeit, die Applikationsteile auch mit einer glanzpolierten und eloxierten Sichtfläche herzustellen. Das in dieser Weise fertiggestellte Kraftfahrzeug-Applikationsteil 10 kann am Kraftfahrzeug mittels der profilierten Einfassungen 32 (Einhängnasen) eingehängt und unter Einsatz von geeigneten Befestigungsmitteln an der Befestigungsbohrung 30 am Kraftfahrzeug befestigt werden - beispielsweise mittels einer Verschraubung.

Das in den Figuren 1 bis 4 jeweils teilweise dargestellte Kraftfahrzeug-Applikationsteil 10 weist eine im Wesentlichen dreieckförmige Außenkontur auf, kann aber auch alternativ andersartig geometrisch ausgebildet sein. Insbesondere aufgrund der sandwichartigen Struktur des Applikationsteils 10 lassen sich problemlos verschiedenste Geometrien in verhältnismäßig einfacher Weise realisieren.

## Patentansprüche

1. Kraftfahrzeug-Applikationsteil, insbesondere Karosserieblende, mit einer Befestigungsseite und mit einer Ansichtsseite, wobei es ein Befestigungsteil, an welchem die Befestigungsseite ausgebildet ist, und ein mit dem Befestigungsteil verbundenes Abdeckteil aufweist, an welchem die Ansichtsseite ausgebildet ist, **dadurch gekennzeichnet, dass** das Befestigungsteil (16) ein Spritzgussteil und das Abdeckteil (18) ein mechanisch verfestigtes Bauteil ist.

2. Applikationsteil nach Anspruch 1, **dadurch gekennzeichnet, dass** das Befestigungsteil (16) und das Abdeckteil (18) mittels einer Schweiß-, Schraub-, Niet-, Füge- und/oder Klebverbindung miteinander verbunden sind.

3. Applikationsteil nach einem der vorhergehenden Ansprüche, **dadurch gekennzeichnet, dass** das Befestigungsteil (16) an der Befestigungsseite (12) und/oder an seiner Verbindungsseite (20) eine geometrische Formstrukturierung aufweist.

4. Applikationsteil nach einem der vorhergehenden Ansprüche, **dadurch gekennzeichnet, dass** das Abdeckteil (18) an seiner Verbindungsseite (20) eine in Bezug auf das Befestigungsteil (16) wenigstens teilweise komplementäre, geometrische Formstrukturierung aufweist.

5. Applikationsteil nach einem der vorhergehenden Ansprüche, **dadurch gekennzeichnet, dass** das Abdeckteil (18) an der Ansichtsseite (14) vollständig eben ausgebildet ist.

6. Applikationsteil nach einem der vorhergehenden Ansprüche, **dadurch gekennzeichnet, dass** das Abdeckteil (18) ein an seiner Verbindungsseite (20) mechanisch bearbeitetes Fließpressteil ist.

7. Applikationsteil nach einem der vorhergehenden Ansprüche, **dadurch gekennzeichnet, dass** das Abdeckteil (18) an seiner Ansichtsseite (14) oberflächenbeschichtet ist.

8. Applikationsteil nach einem der vorhergehenden Ansprüche, **dadurch gekennzeichnet, dass** das Befestigungsteil (16) und das Abdeckteil (18) aus einer Aluminium-Legierung hergestellt sind.

9. Applikationsteil nach einem der vorhergehenden Ansprüche, **dadurch gekennzeichnet, dass** die Verbindungsseiten (20,22) des Befestigungsteils (16) und des Abdeckteils (18) ein Positioniersystem (24) aufweisen.

10. Applikationsteil nach einem der vorhergehenden Ansprüche, **dadurch gekennzeichnet, dass** das Positioniersystem (24) aus mindestens einem Vorsprung (26) und einem zugehörigen, komplementär ausgebildeten Aufnahmesitz (28) besteht.

11. Applikationsteil nach einem der vorhergehenden Ansprüche, **dadurch gekennzeichnet, dass** das Befestigungsteil (16) mit mindestens einer Befestigungsbohrung (30) und an der Befestigungsseite (12) mit mindestens einer Einhängnase (32) versehen ist.

## Claims

1. Motor vehicle application part, in particular a body panel, with a fastening side and with a visible side, the application part having a fastening part, on which the fastening side is formed, and a cover part which is connected to the fastening part and on which the visible side is formed, **characterized in that** the fastening part (16) is an injection-moulded part and the cover part (18) is a mechanically reinforced component.

2. Application part according to claim 1, **characterized in that** the fastening part (16) and the cover part (18) are connected to each other by means of a welded, screwed, riveted, joined and/or adhesive connection.

3. Application part according to one of the preceding claims, **characterized in that** the fastening part (16) has a geometrical shaped structure at the fastening side (12) and/or at its connecting side (20).

4. Application part according to one of the preceding claims, **characterized in that** the cover part (18) has at its connecting side (20) a geometrical shaped structure which is at least partially complementary in relation to the fastening part (16).

5. Application part according to one of the preceding claims, **characterized in that** the cover part (18) is embodied so as to be completely flat at the visible side (14).

6. Application part according to one of the preceding claims, **characterized in that** the cover part (18) is an extruded part which is mechanically processed at its connecting side (20).

7. Application part according to one of the preceding claims, **characterized in that** the cover part (18) is surface-coated at its visible side (14).

8. Application part according to one of the preceding claims, **characterized in that** the fastening part (16) and the cover part (18) are made from an aluminium alloy.

9. Application part according to one of the preceding claims, **characterized in that** the connecting sides (20, 22) of the fastening part (16) and the cover part (18) have a positioning system (24).

10. Application part according to one of the preceding claims, **characterized in that** the positioning system (24) consists of at least one protrusion (26) and an associated, complementarily formed receiving seat (28).

11. Application part according to one of the preceding claims, **characterized in that** the fastening part (16) is provided with at least one fastening bore (30) and, at the fastening side (12), with at least one suspension lug (32).

## Revendications

1. Pièce de finition pour carrosserie de véhicule, en particulier élément d'occultation, avec un côté fixation et un côté visible, présentant une pièce de fixation sur laquelle le côté fixation est formé et une pièce de recouvrement reliée à la pièce de fixation, sur laquelle le côté visible est formé, **caractérisée en ce que** la pièce de fixation (16) est une pièce moulée par injection et la pièce de recouvrement (18) un élément de construction durci mécaniquement.

2. Pièce de finition selon la revendication 1, **caractérisée en ce que** la pièce de fixation (16) et la pièce de recouvrement (18) sont reliées entre elles au moyen d'un assemblage par soudure, vissage, rivetage, jointure et/ou collage.

3. Pièce de finition selon l'une des revendications précédentes, **caractérisée en ce que** la pièce de fixation (16) présente, sur le côté fixation (12) et/ou sur son côté d'assemblage (20), une structure de forme géométrique.

4. Pièce de finition selon l'une des revendications précédentes, **caractérisée en ce que** la pièce de recouvrement (18) présente, sur son côté d'assemblage (20), une structure de forme géométrique au moins en partie complémentaire par rapport à la pièce de fixation (16).

5. Pièce de finition selon l'une des revendications précédentes, **caractérisée en ce que** la pièce de recouvrement (18) est entièrement plane du côté visible (14).

6. Pièce de finition selon l'une des revendications précédentes, **caractérisée en ce que** la pièce de recouvrement (18) est une pièce extrudée usinée mécaniquement sur son côté d'assemblage (20).

7. Pièce de finition selon l'une des revendications précédentes, **caractérisée en ce que** la pièce de recouvrement (18) est pourvue d'un revêtement de surface sur son côté visible (14).

8. Pièce de finition selon l'une des revendications précédentes, **caractérisée en ce que** la pièce de fixation (16) et la pièce de recouvrement (18) sont réalisées dans un alliage d'aluminium.

9. Pièce de finition selon l'une des revendications précédentes, **caractérisée en ce que** les côtés d'assemblage (20, 22) de la pièce de fixation (16) et de la pièce de recouvrement (18) présentent un système de positionnement (24).

10. Pièce de finition selon l'une des revendications précédentes, **caractérisée en ce que** le système de positionnement (24) est constitué d'au moins une saillie (26) et d'un siège de réception (28) correspondant, formé de manière complémentaire.

11. Pièce de finition selon l'une des revendications précédentes, **caractérisée en ce que** la pièce de fixation (16) est pourvue d'au moins un alésage de fixation (30) et, du côté fixation (12), d'au moins un tenon d'accrochage (32).
